# EUROPÄISCHE PATENTSCHRIFT

(11) **EP 2 432 673 B1**
(45) Veröffentlichungstag und Bekanntmachung des Hinweises auf die Patenterteilung: **24.08.2016**
(21) Anmeldenummer: 10721969.3
(22) Anmeldetag: 11.05.2010
(51) Int. Cl.: B61D 27/00, B61D 17/10, F24D 13/02

(54) **HEIZEINRICHTUNG FÜR SCHIENENFAHRZEUGE**
HEATING APPLIANCE FOR RAILWAY VEHICLES
DISPOSITIF DE CHAUFFAGE POUR VÉHICULES FERROVIAIRES

(30) Priorität: 20.05.2009 DE 102009022091
(43) Veröffentlichungstag der Anmeldung: 28.03.2012
(73) Patentinhaber: 3A Technology & Management Ltd., 8212 Neuhausen am Rheinfall (CH)
(72) Erfinder: ANDEREGG, Kurt, CH-9424 Rheineck (CH)
(74) Vertreter: Gernet, Samuel Andreas
(86) Internationale Anmeldenummer: PCT/EP2010/002888
(87) Internationale Veröffentlichungsnummer: WO 2010/133308

(56) Entgegenhaltungen:
- DE-U1- 9 209 999
- DE-U1- 29 702 534
- GB-A- 589 752
- US-A1- 2007 215 589

## Beschreibung

Die Erfindung betrifft eine Heizeinrichtung für Schienenfahrzeuge nach dem Oberbegriff des Anspruchs 1.

Bei bekannten Heizeinrichtungen dieser Art werden die als Heizfolien ausgebildeten Heizelemente auf konventionelle, bereits im Wagen der Schienenfahrzeuge verlegte Bodenplatten geklebt und mit einem Fußbodenbelag abgedeckt. Diese Bauweise hat den Nachteil, dass einzelne Heizelemente im Schadensfall nicht einfach ausgewechselt werden können. Vielmehr benötigt die Demontage der Heizelemente und der elektrischen Anschlüsse für die Heizelemente einen verhältnismäßig hohen Zeitaufwand, wobei ggf. gleichzeitig andere Montagearbeiten im Schienenfahrzeug blockiert werden. Ferner sind die Heizfolien nicht dicht abgeschlossen, so dass eindringende Feuchtigkeit die Heizfolien beschädigen kann. Weiterhin ist als nachteilhaft anzusehen, dass an die Heizelemente angrenzende Materialien, normalerweise Holz, Gummi oder Kunststoffbeläge schlechte Wärmeleiter sind. Dadurch entstehen im Bereich der Heizelemente Temperaturspitzen, die die Heizleistung beeinträchtigen bzw. zu einem unnötig hohen Energieverbrauch führen, um die gewünschte Temperatur im Fahrgastraum des Schienenfahrzeugs zu erreichen.

DE 92 09 999 U1 beschreibt ein Heiz- oder Kühlpaneel aus einem Verbundmaterial mit einer Kernschicht aus einer metallischen Wabenstruktur und zwei Deckschichten, wobei die Kernschicht einen Aufnahmekanal für ein elektrisches Heizkabel oder eine Rohrschlange zur Führung eines Heiz- oder Kühlmediums aufweist.

US 2007/215589 A1 beschreibt ein Bodenheizpaneel aus einem Verbundmaterial enthaltend eine Kernschicht aus wärmedämmendem Material und zwei Deckschichten, wobei im oberen Teil des Kernmaterials eine mäanderförmige Rinne ausgebildet ist, in welche ein Heizelement eingebracht ist.

GB 589 752 A beschreibt eine Heizeinrichtung mit den Merkmalen des Oberbegriffs von Anspruch 1, wobei die Heizeinrichtung als vorgefertigte Gebäudekomponente ausgelegt ist.

Ausgehend von dem beschriebenen Stand der Technik liegt der Erfindung die Aufgabe zugrunde, eine Heizeinrichtung für Schienenfahrzeuge nach dem Oberbegriff des Anspruchs 1 derart weiterzubilden, dass bei einer Beschädigung bzw. einer Fehlfunktion der Heizeinrichtung eine einfache bzw. wenig zeitintensive Reparatur der Heizeinrichtung ermöglicht wird. Diese Aufgabe wird bei einer Heizeinrichtung für Schienenfahrzeuge mit den Merkmalen des Anspruchs 1 gelöst. Der Erfindung liegt dabei die Idee zugrunde, Heizeinheiten und Sandwichstrukturen jeweils als modulare Baueinheit auszubilden, wobei mehrere Baueinheiten mittels Verbindungselementen zueinander positionier- und fixierbar angeordnet sind.

Dadurch wird es ermöglicht, dass im Schadensfall einer Heizeinheit bzw. einer Baueinheit diese einfach ausgetauscht werden kann, da es dann nur erforderlich ist, Verbindungselemente zu demontieren, um die jeweilige Baueinheit auszubauen und durch eine gegebenenfalls bereits bevorratete korrekt arbeitende Baueinheit zu ersetzen.

Vorteilhafte Weiterbildungen der erfindungsgemäßen Heizeinrichtung für Schienenfahrzeuge sind in den Unteransprüchen angegeben.

Die Randprofile sind an den Längs- und Querseiten der Sandwichstruktur angeordnet. Durch diese Bauweise wird ein in sich stabiles Trägerelement geschaffen, das einfach handhabbar ist.

Besonders vorteilhaft ist es hierbei, wenn die Randprofile als aus Leichtmetall, insbesondere aus Aluminium bestehende Hohlprofile ausgebildet sind. Dadurch wird das Gewicht der Baueinheiten reduziert, was zum einen eine einfache Demontage bzw. Montage der Baueinheiten ermöglicht, und zum anderen das Gesamtgewicht der Heizeinrichtung für das Schienenfahrzeug herabsetzt.

Um eine einfache Verbindung zwischen den einzelnen Baueinheiten zu ermöglichen, ist es in einer weiteren vorteilhaften Ausgestaltung der Erfindung vorgesehen, dass die mit dem Verbindungselement angeordneten Randprofile auf der der Heizeinheit abgewandten Seite einen Aufnahmequerschnitt für das Verbindungselement aufweisen, in die das Verbindungselement mit einem gegengleichen Aufnahmequerschnitt formschlüssig eingreift.

Besonders vorteilhaft ist es hierbei, wenn das Verbindungselement als flaches Bauteil ausgebildet ist, eine der Länge der zugeordneten Randprofile entsprechende Länge aufweist und mit seiner Oberseite zumindest im Wesentlichen bündig mit der Sandwichstruktur abschließt. Dadurch lässt sich eine ebene Oberseite der Baueinheiten ermöglichen, die zudem das Ansammeln von Schmutz oder ähnlichem vermeidet.

Um eine einfache Montage der Baueinheiten in dem Schienenfahrzeug zu ermöglichen, ist es in einer weiteren vorteilhaften Ausführungsform vorgesehen, dass das Verbindungselement einen Zwischenabschnitt aufweist, der zwischen den Randprofilen angeordnet ist, so dass zwischen den Randprofilen ein Freiraum ausgebildet ist, und dass das Verbindungselement im Bereich des Zwischenabschnitts wenigstens eine Aufnahme für ein Befestigungselement aufweist, mit der das Verbindungselement mit einer ortsfesten Struktur lösbar verbunden ist.

Um die Anforderung an einen möglichst schallisolierten Aufbau zu erfüllen, ist es darüber hinaus vorteilhaft, wenn die Randprofile auf der Struktur unter Zwischenlage einer Geräuschentkopplungsschicht aufliegt.

Eine rationelle und somit wirtschaftliche Fertigung der Randprofile lässt sich verwirklichen, wenn die Randprofile der Sandwichstruktur an den Längs- und Querseiten paarweise jeweils identisch ausgebildet sind und an ihrer Oberseite jeweils wenigstens eine treppenartige Einformung zur formschlüssigen Aufnahme einer das Heizelement aufnehmenden Heizeinheit aufweisen.

Besonders vorteilhaft ist es hierbei, wenn die Heizeinheit schichtförmig aufgebaut ist und eine aus gut wärmeleitendem Material, vorzugsweise aus Aluminium, bestehende obere Deckschicht und eine untere Deckschicht aufweist, zwischen denen das Heizelement angeordnet ist. Dadurch lässt sich das Heizelement bzw. die Heizeinheit vorab herstellen und hinsichtlich ihrer Funktion überprüfen, sie weist eine gute Wärmeleitfähigkeit sowie Festigkeit auf, und ist durch den schichtartigen Aufbau derart stabil, dass ein einfacher bzw. beschädigungsfreier Transport der Heizeinheit ermöglicht wird, da das Heizelement geschützt angeordnet ist. Ferner wird der Eintritt von Feuchtigkeit in die Heizeinheit und somit die Gefahr der Beschädigung der Heizeinheit zumindest reduziert.

Weiterhin ist es vorteilhaft, im Sinne einer kostengünstigen Herstellung und eines kompakten Aufbaus das Heizelement als elektrisch betriebene Heizfolie mit einem elektrischen Anschlusselement auszubilden.

Um zu vermeiden, dass zusätzlicher Bauraum benötigt wird, um das elektrische Anschlusselement des Heizelements zu verlegen, ist es weiterhin vorteilhaft, dass das elektrische Anschlusselement durch wenigstens eine Durchgangsöffnung des Randprofils hindurchragt und in einem Hohlraum des Randprofils angeordnet ist.

Um den Wirkungsgrad der Heizeinrichtung zu erhöhen und zu vermeiden, dass Wärme an Stellen abgestrahlt wird, die nicht beheizt werden müssen bzw. sollen, ist unterhalb der Heizeinheit zwischen den Randprofilen die aus schlecht wärmeleitendem Material bestehende Kernschicht angeordnet.

Um einen kompakten und stabilen Aufbau der Sandwichstruktur zu ermöglichen, ist an der Unterseite der Sandwichstruktur eine Abschlussplatte angeordnet.

Besonders vorteilhaft lässt sich die erfindungsgemäße Heizeinrichtung als Bodenheizung einsetzen, da sie durch ihre geschlossene Form eine hohe Stabilität bei geringer Bauhöhe ermöglicht.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine modulare Baueinheit für Schienenfahrzeuge mit einer Heizeinrichtung in einer perspektivischen Ansicht;
- Fig.2:: einen Querschnitt durch die Baueinheit gemäß der Fig. 1,
- Fig. 3:: einen Längsschnitt durch mehrere miteinander verbundene Baueinheiten gemäß der Fig. 1,
- Fig. 4:: einen Schnitt in der Ebene IV-IV der Fig. 3,
- Fig. 5:: einen Querschnitt durch eine einzelne Heizeinrichtung und
- Fig. 6:: einen Querschnitt durch eine Heizeinrichtung in Analogie zu Fig. 2 zur Verdeutlichung der Anordnung des elektrischen Anschlusselements der Heizeinrichtung im Randprofil.

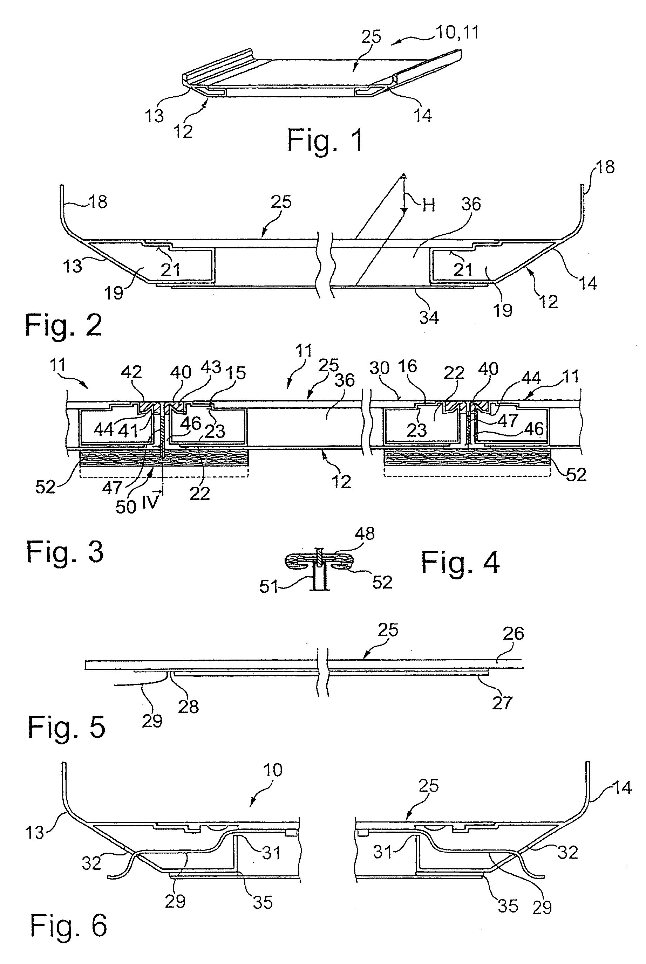

In der Fig. 1 ist eine Heizeinrichtung 10 für ein Schienenfahrzeug dargestellt. Die Heizeinrichtung 10 ist Bestandteil einer modularen Baueinheit 11, die eine als Trägerelement dienende Sandwichstruktur 12 aufweist. Wie aus einer Zusammenschau der Fig. 1 bis 3 erkennbar ist, besteht die Sandwichstruktur 12 aus insgesamt vier Randprofilen 13 bis 16, die einen rechteckförmigen Grundrahmen ausbilden. Hierbei sind die beiden jeweils identisch ausgebildeten Randprofile 13, 14 an den Längsseiten der Sandwichstruktur 12 angeordnet, während die beiden ebenfalls jeweils identischen Randprofile 15, 16 an den Querseiten der Sandwichstruktur 12 angeordnet sind. Die Randprofile 13 bis 16 bestehen aus Leichtmetall und hierbei vorzugsweise aus Aluminium und sind im Strangpressverfahren hergestellt. Weiterhin sind sie als Hohlprofile ausgebildet, wobei die Höhe H der Randprofile 15, 16 je nach Anforderung bzw. Belastbarkeit der Baueinheit 11 gewählt wird, und typischerweise beispielsweise zwischen 10 und 40 mm beträgt. Wie man am besten anhand der Fig. 1 und 2 erkennt, bilden die Randprofile 12 eine wannenartige Form aus, das heißt, dass die beiden Randprofile 13, 14 gewölbte und nach oben gezogene Wandabschnitte 18 aufweisen. Die Randprofile 13 bis 16 können miteinander durch Schweißen, oder aber durch eine andere geeignete Verbindungsart, beispielsweise mittels Schraubverbindungen verbunden sein.

Aufgrund der Hohlbauweise der Randprofile 13 bis 16 weisen die beiden Randprofile 13, 14 jeweils in Längsrichtung einen Hohlraum 19 auf.

An der Oberseite der Randprofile 13, 14 ist an der den Wandabschnitten 18 abgewandten Seite jeweils eine stufenartige Absenkung 21 ausgebildet.

Aus der Fig. 3 ist erkennbar, dass die Randprofile 15, 16 ebenfalls jeweils einen Hohlraum 22 aufweisen. In Analogie zu den Randprofilen 13, 14 weisen die Randprofile 15, 16 an ihrer Oberseite auf der einen Seite ebenfalls jeweils eine Absenkung 23 auf. In den Absenkungen 21, 23 der Randprofile 13 bis 16 ist jeweils eine in der Fig. 5 separat dargestellte Heizeinheit 25 formschlüssig aufgenommen.

Die Heizeinheit 25 ist sandwichartig aufgebaut und weist eine, insbesondere aus gut wärmeleitendem Material, vorzugsweise Aluminiumblech bestehende, obere Deckschicht 26 sowie eine untere Deckschicht 27 auf, welche ebenfalls aus Aluminium besteht. Aufgrund der stufenartigen Ausbildung der Absenkungen 21, 23 weist die obere Deckschicht 26 jeweils eine größere Länge und Breite auf als die untere Deckschicht 27. Zwischen der oberen Deckschicht 26 und der unteren Deckschicht 27 ist ferner eine Heizfolie 28 angeordnet, deren Breite und Länge sich zwischen der Länge und Breite der oberen Deckschicht 26 und der unteren Deckschicht 27 einordnet.

Die an sich bekannte Heizfolie 28 arbeitet elektrisch und weist hierzu ein elektrisches Anschlusselement 29 auf. Wenn die Heizeinheit 25 in den Absenkungen 21, 23 der Sandwichstruktur 12 angeordnet ist, bildet die Oberfläche der Sandwichstruktur 12 eine ebene Oberseite 30 aus, wie dies insbesondere in den Fig. 2 und 3 dargestellt ist.

Die Verbindung zwischen der Heizeinheit 25 mit der Sandwichstruktur 12 erfolgt beispielsweise durch Verkleben in den Absenkungen 21, 23, oder aber durch (nicht dargestellte) Schrauben im Randbereich der oberen Deckschicht 26, welche hierzu für die Schraubenköpfe entsprechende Einsenkungen aufweist, um eine möglichst ebene Oberseite 30 der Baueinheit 11 zu ermöglichen.

Zur Führung der elektrischen Anschlusselemente 29 weist die Sandwichstruktur 12 an seinen Randprofilen 13 bzw. 14 in der Fig. 6 dargestellte Durchgangsbohrungen 31, 32 auf, das bedeutet, dass die elektrischen Anschlusselemente 29 in dem Hohlraum 19 der Randprofile 13, 14 angeordnet sind.

Während die geschlossene Oberseite 30 der Sandwichstruktur 12 durch die Heizeinheiten 25 ausgebildet wird, ist an der Unterseite der Sandwichstruktur 12 eine ebenfalls, vorzugsweise aus Aluminium bestehende, untere Abschlussplatte 34 als Deckschicht vorgesehen. Der Zwischenraum zwischen der unteren Deckschicht 27 der Heizeinheit 25 und der Abschlussplatte 34 der Sandwichstruktur 12 ist durch eine aus schlecht wärmeleitendem Material bestehende Kernschicht 36 aus Strukturschaum ausgefüllt, welche vorzugsweise jeweils in Anlagekontakt mit den Randprofilen 13 bis 16 angeordnet ist. Zur Vermeidung von Wärmebrücken zwischen den Randprofilen 13 bis 16 und der Abschlussplatte 34 sind zwischen der Deckschicht 34 und den Randprofilen 13 bis 16 zusätzlich streifenförmige, beispielsweise aus Kunststoff bestehende Zwischenschichten 35 angeordnet.

Vor der eigentlichen Montage der in der Fig. 6 dargestellten Baueinheit 11 lässt sich die in der Fig. 5 dargestellte Heizeinheit 25 separat fertigen und hinsichtlich ihrer Funktionen überprüfen. Die Heizeinheit 25 wird anschließend auf die Randprofile 13 bis 16 und die Kernschicht 36 aufgesetzt und mit diesem großflächig verklebt. Die elektrischen Anschlusselemente 29 werden hierbei durch die Durchgangsbohrungen 31, 32 in den Randprofilen 13, 14 geführt.

Die soweit beschriebene Baueinheit 11 weist insbesondere eine der Innenbreite des Schienenfahrzeugs angepasste Quererstreckung und zusätzlich aufgrund ihres modulartigen Aufbaus beispielsweise eine Grundlänge in Längsrichtung von beispielsweise 80 cm auf. Eine derartige Baueinheit 11 lässt sich noch gut handhaben, d.h., dass sie ein Gewicht aufweist, welches sich beispielsweise leicht von einem oder zwei Monteuren handhaben lässt sowie die Möglichkeit schafft, die Baueinheit 11, wenn diese bereits in dem Schienenfahrzeug eingebaut ist, leicht durch vorhandene Öffnungen, beispielsweise Türen, wieder aus dem Schienenfahrzeug entfernen zu können.

Erfindungsgemäß ist vorgesehen, dass sich mehrere erfindungsgemäße Baueinheiten 11 (die aufgrund ihrer modularen Bauweise unterschiedliche oder gleiche Längen aufweisen können) miteinander verbinden lassen. Eine derartige Verbindung ist beispielhaft in der Fig. 3 dargestellt. Die Verbindung zwischen den einzelnen Baueinheiten 11 wird an den Querseiten der Baueinheiten 11 mittels Klemmprofilen 40 ermöglicht.

Die insbesondere ebenfalls aus Aluminium bestehenden und im Strangpressverfahren hergestellten Klemmprofile 40 sind im Wesentlichen flach ausgebildet und weisen einen rechteckförmigen Mittelbereich 41 sowie zwei in etwa dreiecksförmige Randbereiche 42, 43 auf. Jeweils ein Randbereich 42, 43 wirkt formschlüssig mit einem entsprechend gegengleich ausgebildeten Randbereich 44 zusammen, der in dem Randprofil 15, 16 in seiner Längsrichtung eingeformt ist. Die Ausbildung des Klemmprofils 40 bzw. der Randbereiche 42 bis 44 ist dabei derart, dass bei montiertem Klemmprofil 40 die Oberseite von miteinander verbundenen Baueinheiten 11 möglichst eben ausgebildet ist.

Wie man anhand der Fig. 3 erkennt, ist zwischen jeweils zwei benachbart angeordneten Baueinheiten 11 aufgrund des mittleren Bereichs 41 des Klemmprofils 40 ein Freiraum 46 ausgebildet. Dieser Freiraum 46 lässt sich zur Befestigung der Klemmprofile 40 und somit der Baueinheiten 11 in dem Schienenfahrzeug nutzen. Hierzu weist das Klemmprofil 40 beispielsweise Durchgangsbohrungen auf, die im mittleren Bereich 41 angeordnet sind. Mittels Befestigungsschrauben 47 lassen sich somit die Klemmprofile 40 an einer Befestigungsplatte 48 verankern.

Die Befestigungsplatte 48 ist Bestandteil einer in dem Schienenfahrzeug angeordneten, ortsfesten Tragkonstruktion 50, welche zur Auflage der Baueinheiten 11 dient. Die sich in Längsrichtung des Schienenfahrzeugs bzw. der Sandwichstruktur 12 erstreckende Tragkonstruktion 50 weist Längsträger 51 mit einem im Querschnitt im Wesentlichen U-förmigen Profil mit ebenen, abgewinkelten Randstreifen 52, 53 auf. Im oberen Bereich des Längsträgers 51 ist dieser mit einer Gummischicht 54 versehen, die die Randstreifen 52, 53 umfasst und in welcher auch die Befestigungsplatte 48 angeordnet ist. Die Gummischicht 54 dient der akustischen Entkoppelung der Baueinheiten 11 von der Tragkonstruktion 50 bzw. von dem Schienenfahrzeug.

Ergänzend wird erwähnt, dass die Heizeinheit 25 anstelle einer elektrisch betriebenen Heizfolie 28 auch bzw. mittels Warmwasser betrieben werden kann. Hierbei kann das warme Wasser zum Beispiel, ähnlich wie in Wohngebäuden, in Schläuchen zwischen der oberen Deckschicht 26 und der unteren Deckschicht geführt sein.

## Patentansprüche

1. Heizeinrichtung (10) für Schienenfahrzeuge, mit wenigstens einer Heizeinheit (25), die mit Randprofilen (13 bis 16) und einer Kernschicht (36) eine tragfähige Sandwichstruktur (12) bildet, wobei mehrere Heizeinheiten (25) und Sandwichstrukturen (12) vorgesehen sind, die jeweils zusammen mit einer unteren Abschlussplatte (34) modulare Baueinheiten (11) bilden, wobei die Randprofile (13 bis 16)jeder Sandwichstruktur (12) einen rechteckigen Grundrahmen ausbilden, die Heizeinheit (25) einen Sandwichaufbau mit einer oberen und unteren Deckschicht (26, 27) und einem dazwischen liegenden Heizelement (28) aufweist, und die Baueinheiten (11) mittels Verbindungselementen (40) zueinander positionier- und fixierbar im Schienenfahrzeug angeordnet sind,
**dadurch gekennzeichnet,**
**dass** an der Oberseite des Grundrahmens die Heizeinheiten (25) aufgenommen sind, und der Zwischenraum zwischen der unteren Deckschicht (27) der Heizeinheit (25) und der Abschlussplatte (34) der Sandwichstruktur (12) durch eine Kernschicht (36) aus Strukturschaum ausgefüllt ist.

2. Heizeinrichtung nach Anspruch 1,
**dadurch gekennzeichnet,**
**dass** die Randprofile (13 bis 16) an den Längs- und Querseiten der Sandwichstruktur (12) angeordnet sind.

3. Heizeinrichtung nach Anspruch 2,
**dadurch gekennzeichnet,**
**dass** die Randprofile (13 bis 16) als aus Leichtmetall, insbesondere aus Aluminium bestehende Hohlprofile ausgebildet und vorzugsweise durch Stangpressen hergestellt sind.

4. Heizeinrichtung nach Anspruch 2 oder 3,
**dadurch gekennzeichnet,**
**dass** die mit dem Verbindungselement (40) verbundenen Randprofile (15, 16) auf der der Heizeinheit (25) abgewandten Seite einen Aufnahmequerschnitt (44) für das Verbindungselement (40) aufweisen, in die das Verbindungselement (40) formschlüssig eingreift.

5. Heizeinrichtung nach Anspruch 4,
**dadurch gekennzeichnet,**
**dass** das Verbindungselement (40) als flaches Bauteil ausgebildet ist, eine der Länge der zugeordneten Randprofile (15, 16) entsprechende Länge aufweist und mit seiner Oberseite zumindest im Wesentlichen bündig mit der Sandwichstruktur (12) abschließt.

6. Heizeinrichtung nach Anspruch 4 oder 5,
**dadurch gekennzeichnet,**
**dass** das Verbindungselement (40) einen Zwischenabschnitt (mittlerer Bereich 41) aufweist, der zwischen den Randprofilen (15, 16) angeordnet ist, so dass zwischen den Randprofilen (15, 16) ein Freiraum (46) ausgebildet ist, und dass das Verbindungselement (40) im Bereich des Zwischenabschnitts (mittlerer Bereich 41) wenigstens eine Aufnahme für ein Befestigungselement (47) aufweist, mit der das Verbindungselement (40) mit einer ortsfesten Struktur (50) lösbar verbunden ist.

7. Heizeinrichtung nach Anspruch 6,
**dadurch gekennzeichnet,**
**dass** die Randprofile (13 bis 16) auf der Struktur (50) unter Zwischenlage einer Geräuschentkopplungsschicht aufliegt.

8. Heizeinrichtung nach einem der Ansprüche 3 bis 7,
**dadurch gekennzeichnet,**
**dass** die Randprofile (13 bis 16) der Sandwichstruktur (12) an den Längs- und Querseiten paarweise jeweils identisch ausgebildet sind und an ihrer Oberseite jeweils wenigstens eine treppenartige Einformung (21, 23) zur formschlüssigen Aufnahme der Heizeinheit (25) aufweisen.

9. Heizeinrichtung nach Anspruch 1,
**dadurch gekennzeichnet,**
**dass** die obere Deckschicht (26) der Heizeinheit (25) aus Aluminium besteht.

10. Heizeinrichtung nach Anspruch 9,
**dadurch gekennzeichnet,**
**dass** das Heizelement als elektrisch betriebene Heizfolie (28) mit einem elektrischen Anschlusselement (29) ausgebildet ist.

11. Heizeinrichtung nach Anspruch 10,
**dadurch gekennzeichnet,**
**dass** das elektrische Anschlusselement (29) durch wenigstens eine Durchgangsöffnung (31, 32) des Randprofils (13, 14) hindurchragt und in einem Hohlraum (19) des Randprofils (13, 14) angeordnet ist.

12. Heizeinrichtung nach Anspruch 1,
**dadurch gekennzeichnet,**
**dass** die Abschlussplatte (34) unter Zwischenlage von wenigstens einer Schicht (35) aus Kunststoff mit den Randprofilen (13 bis 16) verbunden ist.

13. Heizeinrichtung nach einem der Ansprüche 1 bis 12,
**dadurch gekennzeichnet,**
**dass** die Heizeinrichtung (10) als Bodenheizung ausgebildet ist.

## Claims

1. Heating appliance (10) for railway vehicles, comprising at least one heating unit (25), which forms a load-bearing sandwich structure (12) together with edge profiles (13 to 16) and a core layer (36), a plurality of heating units (25) and sandwich structures (12) being provided, which in each case form modular constructional units (11) together with a lower end plate (34), the edge profiles (13 to 16) of each sandwich structure (12) forming a rectangular base frame, the heating unit (25) having a sandwich construction having an upper and lower cover layer (26, 27) and a heating element (28) arranged therebetween, and the constructional units (11) being arranged such that they can be positioned and secured relative to one another in the railway vehicle by means of connecting elements (40), **characterised in that** the heating units (25) are received on the upper face of the base frame, and the intermediate space between the lower cover layer (27) of the heating unit (25) and the end plate (34) of the sandwich structure (12) is filled with a core layer (36) made of structural foam.

2. Heating appliance according to claim 1, **characterised in that** the edge profiles (13 to 16) are arranged on the longitudinal and transverse sides of the sandwich structure (12).

3. Heating appliance according to claim 2, **characterised in that** the edge profiles (13 to 16) are in the form of hollow profiles made of light metal, in particular aluminium, and are preferably produced by extrusion.

4. Heating appliance according to either claim 2 or claim 3, **characterised in that**, on the side facing away from the heating unit (25), the edge profiles (15, 16) which are connected to the connecting element (40) have a receiving cross section (44) for the connecting element (40), in which the connecting element (40) positively engages.

5. Heating appliance according to claim 4, **characterised in that** the connecting element (40) is designed as a planar component, has a length corresponding to the length of the associated edge profiles (15, 16), and is at least substantially flush with the sandwich structure (12) on its upper side.

6. Heating appliance according to either claim 4 or claim 5, **characterised in that** the connecting element (40) has an intermediate portion (central region 41), which is arranged between the edge profiles (15, 16), so that a free space (46) is formed between the edge profiles (15, 16), and so that the connecting element (40) has, in the region of the intermediate portion (central region 41), at least one receiving portion for a fastening element (47), by means of which the connecting element (40) is detachably connected to a stationary structure (50).

7. Heating appliance according to claim 6, **characterised in that** the edge profiles (13 to 16) rest on the structure (50) with a noise decoupling layer being placed therebetween.

8. Heating appliance according to any of claims 3 to 7, **characterised in that** the edge profiles (13 to 16) of the sandwich structure (12) are designed to be identical in each case in pairs on the longitudinal and transverse sides and, on their upper side, each have at least one step-like indentation (21, 23) to positively receive the heating unit (25).

9. Heating appliance according to claim 1, **characterised in that** the upper cover layer (26) of the heating unit (25) consists of aluminium.

10. Heating appliance according to claim 9, **characterised in that** the heating element is designed as an electrically operated heating foil (28) comprising an electrical terminal element (29).

11. Heating appliance according to claim 10, **characterised in that** the electrical terminal element (29) projects through at least one through-opening (31, 32) in the edge profile (13, 14) and is arranged in a cavity (19) in the edge profile (13, 14).

12. Heating appliance according to claim 1, **characterised in that** the end plate (34) is connected to the edge profiles (13 to 16), and at least one layer (35) made of plastics material is placed therebetween.

13. Heating appliance according to any of claims 1 to 12, **characterised in that** the heating appliance (10) is designed as floor heating.

## Revendications

1. Dispositif de chauffage (10) pour véhicules sur rails, comprenant au moins une unité de chauffage (25), qui forme, avec des profilés de bordure (13 à 16) et une couche formant noyau central (36), une structure en sandwich (12) autoporteuse, dispositif
dans lequel sont prévues plusieurs unités de chauffage (25) et structures en sandwich (12), qui forment ensemble avec une plaque terminale inférieure (34), des unités de construction modulaires (11), et
dans lequel les profilés de bordure (13 à 16) de chaque structure en sandwich (12) forment un cadre de base rectangulaire, l'unité de chauffage (25) présente un mode de construction en sandwich avec une couche de recouvrement supérieure et inférieure (26, 27) entre lesquelles est placé un élément chauffant (28), et les unités de construction (11) sont agencées dans le véhicule sur rails en pouvant être fixées et positionnées les unes par rapport aux autres au moyen d'éléments d'assemblage (40),
**caractérisé**
**en ce que** les unités de chauffage (25) sont logées sur le côté supérieur du cadre de base, et l'espace intermédiaire entre la couche de recouvrement inférieure (27) de l'unité de chauffage (25) et la plaque terminale (34) de la structure en sandwich (12), est rempli par une couche formant noyau central (36) en une mousse structurelle.

2. Dispositif de chauffage selon la revendication 1, **caractérisé**
**en ce que** les profilés de bordure (13 à 16) sont agencés sur les côtés longitudinaux et transversaux de la structure en sandwich (12).

3. Dispositif de chauffage selon la revendication 2, **caractérisé**
**en ce que** les profilés de bordure (13 à 16) sont réalisés sous la forme de profilés creux en métal léger, notamment en aluminium, et sont de préférence fabriqués par extrusion.

4. Dispositif de chauffage selon la revendication 2 ou la revendication 3, **caractérisé**
**en ce que** les profilés de bordure (15, 16) reliés à l'élément d'assemblage (40) présentent, sur le côté opposé à celui dirigé vers l'unité de chauffage (25), une section d'accueil (44) pour l'élément d'assemblage (40), dans laquelle s'engage l'élément d'assemblage (40), par complémentarité de formes.

5. Dispositif de chauffage selon la revendication 4, **caractérisé**
**en ce que** l'élément d'assemblage (40) est réalisé sous la forme d'une pièce plate, présente une longueur correspondant à la longueur des profilés de bordure (15, 16) associés, et, avec son côté supérieur, arrive sensiblement au ras de la structure en sandwich (12).

6. Dispositif de chauffage selon la revendication 4 ou la revendication 5, **caractérisé**
**en ce que** l'élément d'assemblage (40) présente un tronçon intermédiaire (zone médiane 41), qui est agencé entre les profilés de bordure (15, 16), en formant ainsi un espace libre (46) entre les profilés de bordure (15, 16), et en ce que l'élément d'assemblage (40) présente, dans la zone du tronçon intermédiaire (zone médiane 41), au moins un logement d'accueil pour un élément de fixation (47) à l'aide duquel l'élément d'assemblage (40) est relié de manière amovible à une structure (50) en position fixe.

7. Dispositif de chauffage selon la revendication 6, **caractérisé**
**en ce que** les profilés de bordure (13 à 16) reposent sur la structure (50) avec interposition d'une couche de découplage acoustique.

8. Dispositif de chauffage selon l'une des revendications 3 à 7, **caractérisé**
**en ce que** les profilés de bordure (13 à 16) de la structure en sandwich (12) sont de configuration respectivement identique, par paire, sur les côtés longitudinaux et transversaux, et présentent respectivement sur leur côté supérieur, une forme en creux en gradins (21, 23) pour l'accueil par complémentarité de formes, de l'unité de chauffage (25).

9. Dispositif de chauffage selon la revendication 1, **caractérisé**
**en ce que** la couche de recouvrement supérieure (26) de l'unité de chauffage (25) est réalisée en aluminium.

10. Dispositif de chauffage selon la revendication 9, **caractérisé**
**en ce que** l'élément chauffant est réalisé sous la forme d'un film chauffant (28) fonctionnant à l'électricité, et comprenant un élément de raccordement électrique (29) .

11. Dispositif de chauffage selon la revendication 10, **caractérisé**
**en ce que** l'élément de raccordement électrique (29) traverse au moins une ouverture de passage (31, 32) du profilé de bordure (13, 14) et est agencé dans une cavité (19) du profilé de bordure (13, 14).

12. Dispositif de chauffage selon la revendication 1, **caractérisé**
**en ce que** la plaque terminale (34) est reliée aux profilés de bordure (13 à 16) avec interposition d'au moins une couche (35) en matière plastique.

13. Dispositif de chauffage selon l'une des revendications 1 à 12, **caractérisé**
**en ce que** le dispositif de chauffage (10) est réalisé sous la forme d'un chauffage au sol.
